# EUROPEAN PATENT SPECIFICATION

(11) **EP 0 770 002 B1**
(45) Date of publication and mention of the grant of the patent: **02.01.2004**
(21) Application number: 95926178.5
(22) Date of filing: 07.07.1995
(51) Int. Cl.: B32B 7/12, B32B 21/06, B32B 23/06, B32B 23/08, B32B 27/08, B32B 27/10, B32B 27/06, B65D 65/40

(54) **BARRIER FILM STRUCTURES**
SPERRSCHICHTSTRUKTUREN
STRUCTURES DE FILMS A EFFET BARRIERE

(30) Priority: 08.07.1994 US 272056; 21.07.1994 US 278200; 31.08.1994 US 297945
(43) Date of publication of application: 02.05.1997
(73) Proprietor: EXXONMOBIL OIL CORPORATION, Fairfax, VA 22037 (US)
(72) Inventor: BIANCHINI, Eber, Carbone, Williamsville, NY 14221 (US); KNOERZER, Anthony, Robert, Plano, TX 75093 (US); PARR, Larry, Arthur, Canandaigua, NY 14424 (US); REID, Leland, Wallace, Palmyra, NY 14522 (US)
(74) Representative: Lawrence, Peter Robin Broughton
(86) International application number: PCT/US1995/008426
(87) International publication number: WO 1996/001736

(56) References cited:
- WO-A-93/11938
- WO-A-93/12931
- WO-A-96/27624
- FR-A- 2 285 231
- US-A- 4 214 039
- US-A- 4 564 559
- US-A- 5 133 999
- US-A- 5 230 963

## Description

The present invention relates to flexible polymeric film packaging structures with improved oxygen, flavor/odor, grease/oil and moisture barrier characteristics. More specifically, the invention relates to a film structure which includes a polymeric substrate, an oxygen barrier containing cross-linked polyvinyl alcohol ("PVOH") and a moisture barrier selected from cellulose material, polyvinylidene ("PVdC") coating and metallized polymeric composite.

Certain polymeric films employed for the packaging of foods inherently permit the transmission of oxygen and moisture from the outside of the film to the inside of a food package wrapped with the film. Oxygen and/or moisture permit rapid deterioration of foods packaged in polymeric films. Exclusion of oxygen and moisture from packaged foods retards product spoilage. In certain applications, such as packaging of detergents, cleaners, fertilizers and the like, it is important that the packaging material prevents the odors from spreading outside. In other applications, such as juices, wines, pretzels and biscuits it is sought to protect the contents against acquisition of undesirable flavors from the outside. Therefore, film structures which provide a barrier to oxygen, flavor/odor, grease/oil and moisture are highly desirable food packaging materials.

Attempts have been made in the past to provide polymeric films which have high oxygen, flavor/odor, grease/oil and moisture barrier. Some polymeric films disclosed in the prior art include PVOH. Polyvinyl alcohols are polymers containing (-CH₂ - CHOH-) groups. They can be applied from water solution and are in many respects attractive materials for use as barrier coatings for thermoplastic polymer.substrates. When applied to thermoplastic polymer surfaces which have been treated by any of a number of means to render them receptive to coatings, polyvinyl alcohols adhere adequately, are flexible, clear and transparent, provide an oxygen impermeable barrier, and are resistant to permeation by greases, oils and a wide variety of common organic solvents, such as esters, ethers, ketones, hydrocarbons and chlorinated hydrocarbons.

The advantage of water solubility in the application of PVOH as a barrier coating becomes its chief drawback, however, when the barrier coating has been formed on a thermoplastic polymer substrate. The poor water resistance of PVOH restricts its use as a barrier coating to those few applications where nearly anhydrous conditions prevail. Moisture may act to cause staining or wear due to friction, an unpleasant feel to the touch and a dull appearance. It is also known that oxygen permeability of PVOH increases in proportion to its moisture content.

A number of methods have been known for increasing the water resistance of PVOH, but none provides entirely satisfactory results. Examples are in WO93/11938 and US-A-5 230 963. In spite of various heretofore practiced methods, such as cross-linking PVOH with potassium dichromate, formaldehyde or phenol-formaldehyde resins, the polyvinyl alcohol still tends to soften, swell and lose adhering strength when exposed to water or even moisture vapor. Hence, barrier coatings consisting only of polyvinyl alcohol cannot be used where a substantial degree of water-resistance or moisture-proofness is required.

Accordingly, there is still a need in the art of packaging films to provide a film structure which has excellent oxygen, flavor/odor, grease/oil and moisture barrier characteristics.

The present invention, which addresses the needs of the prior art, provides packaging film structures which have low oxygen, flavor/odor, grease/oil transmissive charactristics and high moisture barrier properties.

The invention provides film structures as defined in claim 1. The invention also provides a process as defined in claim 13. The novel film structures have enhanced oxygen, flavour/odor, grease/oil transmissive characteristics, and high moisture barrier are obtained.

The film structure of this invention includes a polymeric substrate adapted to receive an oxygen barrier layer by surface treating and priming of at least one side thereof. Once treated and primed, the surface of the polymeric substrate is provided with an oxygen barrier layer which includes PVOH cross-linked with a cross-linking agent in the presence of a catalytic amount of inorganic acid, preferably sulfuric acid. If a cellulose material is to be the moisture barrier of the film, it is then laminated by adhesion onto the outer surface of the oxygen barrier of the film structure. The adhesive is preferably polyurethane or polyethylene. The cellulose material is preferably paperboard or fiberboard, and most preferably box board.

If the moisture barrier of the film is to be a PVdC coating, the film structure polymeric core has both surfaces treated to receive other coatings. The surface treatment is accomplished by well known methods in the art, corona or flame treatment being preferred. Both surfaces of the polymeric core may then be primed. Poly(etyleneimine) is used for the PVOH receiving surface, and epoxy is used for the PVdC receiving surface. Once treated and primed, the polymeric core is provided on one surface with a cross-linked PVOH layer, as above, and on the other surface, the polymeric core is coated with PVdC.

If a metallized polymeric composite is to be used as the moisture barrier, a metallized polymeric film is laminated by adhesion or extrusion onto the outer surface of the oxygen barrier of the film structure. The adhesive is preferably polyurethane or polyethylene for extrusion lamination. The metallized polymeric film is preferably metallized oriented polypropylene. The use of metallized structures allows the packaging film structure to be printed on the oxygen barrier layer and the graphics remain well protected.

In all packaging film structures of the present invention the polymeric substrate may be oriented polyethylene terephthalate, nylon, polypropylene and polyethylene. The core may also include a coextruded propylene-ethylene copolymer skin. The polymeric substrate is usually surface treated by known processes, preferably corona treatment, to a surface free energy of 35 dynes/cm or higher.

The present invention also provides a process for preparing packaging film structures having improved oxygen and moisture barrier properties. The process includes coating at least one surface of a primed, surface treated polymeric substrate with an aqueous solution of PVOH, aldehyde-containing crosslinking agent and a catalytic amount of inorganic acid, preferably sulfuric acid, and allowing the polyvinyl alcohol to cross-link thus forming an oxygen barrier. The aqueous solution of PVOH includes a solid content comprising from 62.5% to 95% by weight of PVOH, from 5% to 30% by weight of crosslinking agent and up to 7.5% by weight of acid catalyst. If a cellulose material is to be the moisture barrier of the film, it is then secured to an outer surface of the oxygen barrier by adhesion lamination. If the moisture barrier is to be a PVdC coating, PVdC is then applied and the resulting film is dried. If the moisture barrier is to be a metallized polymeric layer, it is then secured to an outer surface of the oxygen barrier by adhesion or extrusion lamination. Packaging film structures made by the above process are also encompassed by the present invention.

As a result of the present invention, packaging film structures are provided which have excellent oxygen, flavor/odor, grease/oil, and moisture barrier properties. The film structures of the present invention having a moisture barrier comprising a cellulose material have been found to be especially useful in a packaging of tomato sauces, condiments, wines, juices and detergents, in which it is important that the flavor or odor of the foodstuffs is contained within the package. These film structures are also useful in packaging of milk, creams and the like in which preventing the acquisition of outside odors is important to preserving the freshness of the products. In addition, the layer of cross-linked PVOH coating used in the present invention may be used at thinner gauges than other oxygen barrier layers. For example, less than 0.05 mils of cross-linked PVOH provides an oxygen barrier which is as effective as 0.48 mils of EVOH coating. Thus, by using the packaging film structures of the present invention, significant manufacturing cost savings can be realized.

The film structure having a moisture barrier comprising a PVdC coating is also transparent and heat sealable. These film structures have been found to be especially useful in packaging condiments and various suaces, such as tomato sauce and the like. The film is quite sturdy. It may be used as a single, i.e., a mono web to form larger packages to replace, for example, the 110 ounce tin can, ordinarily used to package tomato sauce for institutions. In most applications mono webs cannot be used by themselves because they are net sufficiently sturdy, rupture easily, and have insufficient barrier properties. For many applications, the film structure consists of at least two coextruded mono webs. By using a mono web, the coextrusion lamination step is eliminated and significant cost savings can be realized. Moreover, because the package is also transparent, the end used can x-ray scan it or otherwise inspect its contents.

These structures having a moisture barrier comprising a metallized polymeric layer have been found to be especially advantageous in medical packaging and wine bags. In the wine market, many wines are sold in bag-in-box packaging. Typically, such packaging requires two metallized polyester films, a structure which is twice as expensive as the cross-linked PVOH/metallized OPP laminates of the present invention. Thus, by using the packaging film structure of the present invention, significant manufacturing costs can be realized. Moreover, the metallized polyester film structure allows the package to be surface printed only. In the metallized/cross-linked PVOH film of the present invention, the PVOH surface is printed and then attached to the metallized film, so that the graphics remain well protected by the OPP substrate of the cross-linked PVOH combination.

Fig. 1 shows a cross-sectional view of one embodiment of the present invention, wherein the foodstuff is next to the sealant coated cellulose material.

Fig. 2 shows a cross-sectional view of another embodiment of the present invention, wherein the foodstuff is next to the sealant coated polymeric substrate.

Fig. 3 illustrates one embodiment of the present invention, wherein primer coatings have been applied to both surfaces of the polymeric core.

Fig. 4 shows a cross-sectional view of another embodiment of the present invention.

Certain barrier film combinations have excellent oxygen barrier properties. However, for certain commercial applications the moisture barrier properties of these films can be improved.

The present invention provides, as defined in claim 1, a (1) cellulose bearing, (2) PVdC coated, or (3) metallized polymeric film structure including oxygen, flavor/odor, grease/oil, and moisture barriers. The oxygen barrier includes cross-linked PVOH and the moisture barrier is a (1) cellulose material, preferably box board, (2) PVdC layer, or (3) metallized polymeric composite, preferably metallized oriented polypropylene. The moisture barrier may be applied to the outer surface of the oxygen barrier.

The polymeric materials contemplated as the core or substrate of the multilayer structure of the present invention include any polymeric film oriented or unoriented which inherently permits the transmission of oxygen, flavor/odor, and grease/oil wherein the utility of such film would call for a minimization of the transmission of oxygen, flavor/odors, and grease oil. In most cases, the source of the oxygen referred to herein is atmospheric oxygen. The source of flavor is the condiment flavor, and the source of odors is from the environment. While nylon, polyethylene terephthalate ("PET"), polycarbonate films are contemplated herein, a particularly preferred class of films is the polyolefins. Within the polyolefin class, homopolymers and copolymers of propylene, low density ("LDPE"), and linear low density polyethylene ("LLDPE") are preferred. High density polyethylene ("HDPE") may also be used. Particularly preferred are isotactic polypropylenes containing at least 80% by weight of isotactic polypropylene. The preferred core can be homopolypropylene having a melting point range of from 161° to 169°C. A commercially available material of this description is ARCO W472. The preferred core layer can also be coextruded with a thin skin layer, amounting to 2 to 12% of the total thickness, of a copolymer of propylene and another olefin, e.g., ethylene, butene-1. The other olefin which can be present in the copolymer is in an amount of from 1 to 7 wt.%.

The polymeric substrate can be of any desired thickness, although thickness will typically range from 0.013 to 0.05 mm (0.5 to 2 mils) (or 0.18 to 0.75 mm (0.7 to 3 mils) for PVdC coated product) to ensure good machinability on high-speed packaging equipment. The OPP film should preferably have a thickness of 0.025 mm (1.0 mil) (or 0.043 mm (1.75 mils) for PVdC coated product).

It has been found advantageous to treat the substrate or base layer prior to receiving the oxygen and moisture barrier layers. Such treatment enhances the adhesion of other coatings.

A preferred treatment involves treating the surface to a surface tension level of at least 35 and preferably from 38 to 45 x 10⁻³N/m (38 to 45 dynes/cm) in accordance with ASTM Standard D2578-84. The treatment can be flame treatment, plasma treatment, chemical treatment or corona discharge treatment. Flame treatment and corona discharge treatment are preferred with corona discharge treatment being particularly preferred.

After this treatment, a suitable primer material is coated onto the treated surface. Preferred primer materials are those disclosed in U.S. Patent No. 4,564,559. These include a primer produced by condensing a monoaldehyde with an interpolymer of acrylamide or methacrylamide and at least one other unsaturated monomer. Further included is a primer material produced by condensing aminoaldehyde with acrylamide or methacrylamide and subsequently interpolymerizing the condensation product with at least one other unsaturated monomer in the presence of a C₁-C₆ alkanol.

A particularly preferred primer material for the structure contemplated herein has been found to be poly(ethyleneimine). The imine primer provides an overall adhesively active surface for thorough and secure bonding with the subsequently applied cross-linked polyvinyl alcohol and PVdC on the other surface of the substrate when PVdC comprises the moisture barrier. It has been found that an effective coating solution concentration of the poly(ethyleneimine) applied from either aqueous or organic solvent media, such as ethanol, is a solution comprising from 0.1 to 0.6% by weight of the poly(ethyleneimine). A commercially available material of this type is known as Polymin P, a product of BASF-Wyandotte Corporation.

Another particularly preferred primer material is the reaction product of an epoxy resin as a first component with an acidified aminoethylated vinyl polymer as the second component. The contemplated epoxy resins are glycidyl ethers of polyhydroxy compounds, such as resorcinol, hydroquinone, Novolac® resins, and the like.

Although the specific structure of the epoxy resin is not critical to the primer employed in the present invention, important considerations in the selection of the epoxy resin revolve around its physical state. For example, it must be liquid and capable of being readily dispersed or dissolved with the second component or curing agent as described hereinbelow. If the epoxy resin is of low viscosity, it may be stirred directly into the second component, i.e., curing agent, however, it is preferred to employ the epoxy resin in an aqueous emulsion.

The second component in the epoxy primer composition of the present invention is an amino modified acrylic polymer which is water soluble. This polymer is a curing agent for the epoxy compound. The preferred material is described in U.S. Patent No. 3,719,629.

In one embodiment of the present invention, a liquid epoxy resin is emulsified in a solution of the curing agent by rapid stirring, the resultant dispersion is diluted with water to the desired concentration for coating, usually from 2 to 20% solids. When mixing the epoxy resin with the curing agent, it is generally preferred to use a stoichiometric equivalent balance of epoxy and amine groups. However, it has been found that the stoichiometric ratio may be varied over a wide range, from 1 epoxy to 3 amine groups through 3 epoxy groups to 1 amine group. Any of the above described primers can be employed in the range of 0.001 to 3.5 g/m².

Polyvinyl alcohol ("PVOH") as used in the present invention and claims refers to a normally solid polymeric material, soluble in water, but insoluble in most organic solvents and characterized by the presence of (-CH₂-CHOH-) units in the polymer chain. These polymers are ordinarily prepared by the replacement of the acetate groups of polyvinyl acetate with hydroxyl groups as by hydrolysis or alcoholysis. The percent of acetate groups replaced by hydroxyl groups is the degree of hydrolysis PVOH thus formed and indicates the percent of hydroxyl groups present in PVOH out of the total possible hydroxyl groups. As explained hereinbelow the crosslinking reaction by which the superior barrier coatings of this invention are obtained proceeds through the hydroxyl groups of PVOH. Therefore, only substantially completely hydrolyzed PVOH are useful in this invention. By the term "substantially completely hydrolyzed" in the present specification and claims is meant a degree of hydrolysis of above 85%. We have found that PVOH having an hydroxyl content above 88% and particularly above 95% provide superior resistance, clarity and flexibility and adhering strength. Hydroxyl group contents of 99% to 100% provide the best barrier coatings and are particularly preferred for use in this invention.

The PVOH employed herein can be any commercially available material. For example, ELVANOL 71-30 or ELVANOL 90-50 are E.I. duPont products.

The PVOH coating solution is prepared by dissolving the polymer in hot water, cooling and mixing both with a suitable crosslinking agent and inorganic acid, preferably sulfuric acid, as the catalyst. The crosslinking agent can be a melamine- or ureaformaldehyde resin. Commercially available cross-linkers also would include PAREZ 613, a methylated melamine formaldehyde; and CYMEL 373, a methylated melamine formaldehyde; CYMEL 401, a trimethylol melamine urea formaldehyde; glyoxal; and borax. Sulfuric acid as the catalyst has been discovered to be far superior to nitric acid, ammonium chloride and ammonium nitrate.

Crosslinking is carried out to make the PVOH less moisture sensitive but it is essential that this does not substantially occur before the coating weight is applied and evenly distributed. This is effected by making up the aqueous solution so that the initial concentration is too low for this to occur but, as drying occurs, the concentration increases and the rate of crosslinking also increases.

Suitable concentrations have been found to be from 1 to 35 wt.%, preferably from 4 to 8 wt.% of the solution, which are PVOH plus crosslinking agent plus inorganic acid, e.g., sulfuric acid, in a catalytically active amount. If the solids content is higher, the solution becomes too viscous; if lower, good water resistance is not obtained. From 5% to 30 wt.%, typically 15% crosslinking agent is used with from 0.1% to 7.5%, typically 2 wt.% of the sulfuric acid catalyst. A preferred formulation comprises the following solids content: 85.5 wt.% PVOH; 12.8 wt.% methylated melamine formaldehyde; and 1.7 wt.% sulfuric acid. The acid, e.g., sulfuric acid, employed can have a strength ranging from 0.1 to 20 wt.%.

Aqueous PVOH solutions were prepared by dissolving sufficient ELVANOL 71-30 in hot water to form 8 wt.% solution which were then cooled. To these solutions were added a 20 wt.% aqueous melamine formaldehyde solution and the appropriate amount of a solution of aqueous ammonium chloride, sulfuric acid, ammonium sulphate, ammonium nitrate or nitric acid to provide the formulations shown in the Table 1 below. Cross-linked PVOH can be present in an amount from 0.2 to 4.5 g/m², usually from 0.4 to 3 g/m².

The cross-linked PVOH coated films described above are intended, in one embodiment, to be adhered to cellulose materials such as paper, paperboard and fiberboard by adhesion or extrusion lamination. The adhesion or extrusion lamination of the cellulose material is to the outer surface of the cross-linked PVOH layer. The resulting structure is capable of holding liquids and has a high oxygen and flavor/odor, grease/oil barrier. For example, unlaminated box board material has an average oxygen transmission rate ("TO₂") in excess of 2300 cc/m²/24 hr at 23.8°C and 0% relative humidity ("RH"). When cross-linked PVOH coated film is laminated to box board material the TO₂ rate was significantly lower, namely 0.309 cc/m²/24 hr at 23.8°C and 0% RH and 1.55 cc/m²/24 hr at 23.8°C and 75% RH.

The lamination to box board material is accomplished by using an adhesive such as polyurethane, acrylics or PVdC's. The resulting structure is then extrusion coated preferably with a sealant layer of SURLYN® or polyethylene to prevent leaching of any cellulose component into the liquid which comes in contact with the sealant layer and to enhance the moisture barrier of the resulting film structure. Containers formed from the packaging film structure of the present invention can be used to package milk, orange juice and wine.

It has also been found that by using a cross-linked PVOH film combination laminated to box board an excellent oxygen barrier is provided which requires considerably less coating of cross-linked PVOH than a comparable EVOH film. For example, a 48 gauge layer of EVOH film provides an oxygen barrier of 0.62 cc/m²/24 hr. at 23.8°C, 0% RH and WVTR of 1550 g/m²/24 hr at 37.8°C, 90% RH. The EVOH has no moisture barrier. The same oxygen barrier value and a WVTR value of 5.42 g/m²/24 hr at 37.8°C, 90% RH are obtained when a substrate of 79 gauge OPP is covered with only a 3 gauge layer of cross-linked PVOH. Thus, significant cost savings can be realized as a result of using a much thinner coating of PVOH.

Cellulose materials useful in the present invention are generally paper products such as paper, paperboard and fiberboard. Although there is no strict distinction between paper and paperboard, paper is considered to be a product made from cellulose fibers which is less than 0.0304 cm (0.012 inch) thick. Paper used in packaging may be course and fine. Course packaging paper is known as kraft paper and is almost always made of unbleached kraft soft wood pulps. Fine papers, generally made of bleached pulp, are typically used in applications requiring printing, writing, and special functional properties such as barriers to liquid and/or gaseous penetrants. Other types of paper useful in the present invention are parchment, grease proof, glassine, water, grease and oil resistant, waxed, specialty-treated, wet-strength papers, all as defined in M. Bakker, The Wiley Encyclopedia of Packaging Technology, 497-500 (1986) .

A preferred cellulose fiber material useful in the present invention is paperboard. Paperboard is a relatively stiff paper product usually greater than 0.0304 cm (12 mils). The term paperboard is used to distinguish the product from paper which is thin and quite flexible. Paperboard may have single-ply or multi-ply structure. It can be formed on a Fourdrinier wire part, a single or a series of modern formers.

The single-ply paperboard useful for this invention is made from 100% bleached-chemical wood pulp and can be used for food packaging where purity and clean appearance is required together with a degree of strength and a surface of sufficient quality to accept good-quality print. Compared to single-ply structures, multi-ply paperboard can be used over a much wider range of applications because virgin-pulp outer layers with good appearance, strength, and printing properties can be combined with lower-grade middle plies. The general term for this range of paperboard is folding box board.

Another type of paperboard known as fiberboard, used to produce large and strong cases is also useful in the present invention. The materials used for the construction of these containers are made from several layers of paperboard. There are two main types: solid board wherein two or more boards are laminated together and corrugated board. In the production of corrugated board, two facings are glued to both sides of the corrugating medium to produce a single-wall corrugated board. Three facings and two media are used to obtain double-wall corrugated board. Triple-wall corrugated board uses four facings and three media. In the structures of the present invention single or multi-ply paperboard hard-sized for water resistance according to known techniques in the art is preferred. Types of paperboard and fiberboard are as defined in M. Bakker, The Wiley Encyclopedia of Packaging Technology, 500-506 (1986).

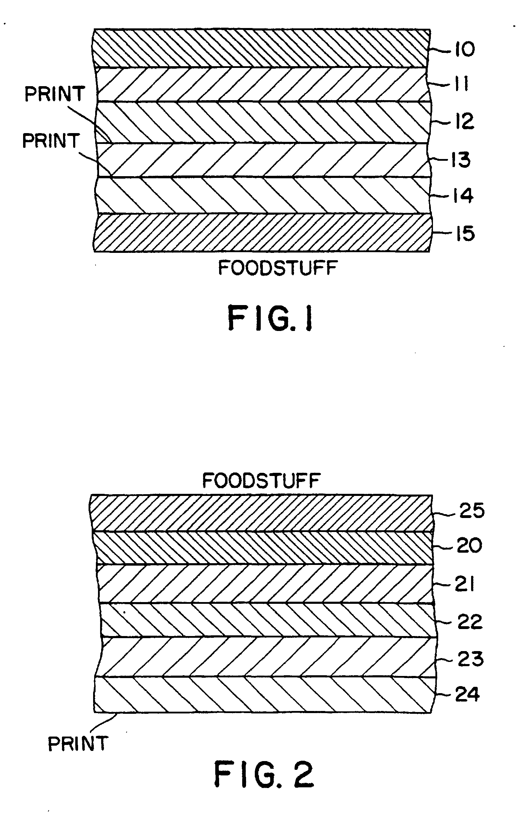

The cross-linked PVOH/cellulose material structure of the present invention has excellent oxygen and flavor/odor, grease/oil barrier characteristics and is capable of holding liquids. Depending upon the application, it is possible to employ the film structure of the present invention to hold liquids, other foodstuffs or detergent materials next to the sealant coated cellulose material layer as illustrated in Figure 1 or next to the sealant coated polymeric substrate as illustrated in Figure 2.

Figure 1 shows a schematic cross-section of a film structure prepared according to the present invention. Layer 10 represents a surface treated polymeric substrate which is coated with a primer layer 11 on at least one surface to which a cross-linked PVOH layer 12 is adhered. The cross-linked PVOH layer may be printed and then adhered to a cellulose material layer 14 by using an adhesive coating 13. Optionally, instead of printing the cross-linked PVOH layer, the cellulose material may be printed and then adhered to a cross-linked PVOH film structure. When the cellulose material is next to a liquid, in order to prevent leaching of any cellulose component into the liquid, the resulting structure is extrusion coated with a sealant 15 such as SURLYN® or polyethylene on the outer surface of the cellulose material. The resulting film structure also has enhanced moisture barrier characteristics.

Figure 2 illustrates another embodiment of the present invention, wherein layer 20 represents a polymeric substrate surface treated on at least one side, primed with a primer coating 21 surface treated and thus adapted to receive a cross-linked PVOH layer 22 which can then be adhered to a cellulose material 24 by using an adhesive coating 23. The cellulose material may be printed. When the polymeric substrate is on the inside, then the cellulose containing resulting film structure is extrusion coated with a sealant 25, such as SURLYN® or polyethylene on the outer surface of the polymeric substrate to provide an enhanced moisture barrier.

The cross-linked PVOH coated films described above are, in a second embodiment, intended to be adhesively laminated to either oriented or unoriented commercially available thermoplastic films such as homopolymer polypropylene film, polypropylene with coated layers, polypropylene with slip additives, polypropylene with coextruded layers, opaque polypropylene, polyethylene, nylon, polyethylene terephthalate, polycarbonate, polystyrene, etc. A preferred class of films are the polyolefins. Most preferred is a polymeric substrate of OPP having a thickness of 0.038 mm (1.50 mil).

The cross-linked PVOH coated films described above may be coated with other coatings to enhance other desirable properties, such as moisture barrier properties. PVdC is a particularly preferred coating that could be applied to the above cross-linked PVOH film combination. The resulting film has excellent oxygen, flavor/odor, grease/oil and moisture barrier properties. Additionally, the film is also heat sealable, and quite sturdy. The PVdC coated film of the present invention can be used as a mono web providing the user with significant cost savings.

PVdC also more correctly referred to as copolymers of vinylidene chloride ("PVdC" or "VdC copolymers") are copolymers of 65 to 96% by weight of vinylidene chloride and 4 to 35% of one or more comonomers such as vinyl chloride, acrylonitrile, methacrylonitrile, methyl methacrylate, or methyl acrylate, hereafter referred to as PVdC. A suitable grade contains 7 weight percent methacrylonitrile, 3 weight percent methyl methacrylate, and 0.3 weight percent itaconinic acid comonomers. PVdC customarily include formulation additives such as waxes, fatty acids and derivatives thereof, particulate matter, and polymeric species such as mixed polyesters. Such additives may be useful to reduce brittleness and stiffness of the polymer or to improve its heat sealability and handling properties. Commercially available VdC copolymers useful for the present invention are manufactured by Morton Co.

By adding another layer of PVdC on the other surface of the polymeric substrate which is opposite the cross-linked PVOH bearing surface, the moisture barrier of the film combination is significantly improved. For example, an uncoated film had an oxygen transmission rate ("TO₂") in excess of 2324.9 cc/m²/24 hr. at 23.8°C, 0% relative humidity ("RH")/and a water vapor transmission rate ("WVTR") of 5.58 g/m²/24 hr at 37.8°C. 90% RH. A film combination according to this embodiment of the present invention coated with both cross-linked PVOH and PVdC had a TO₂ of 0.31 cc/m²/24hr at 23.8°C 75% pH. The WVTR was 2.325 g/m²/24 hr at 37.8°C.

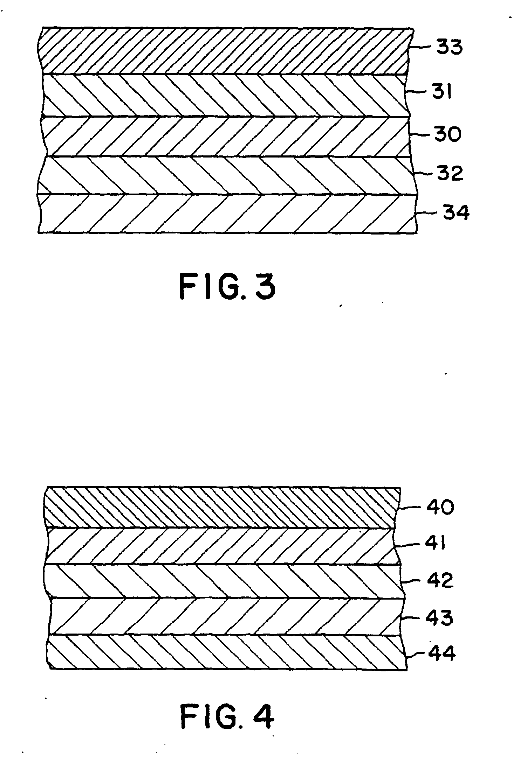

Fig. 3 shows a schematic cross section of a film prepared by the present invention. Layer 30 represents the treated polymeric core which is coated with a poly(ethyleneimine) layer 31 on one surface and dry epoxy primer 32 on the other surface. The cross-linked PVOH layer 33 is adhered to the surface bearing poly(ethyleneimine) primer and the PVdC layer 34 is adhered to the other epoxy coated surface.

The PVOH/PVdC film structure described above is used as a mono web and thus provides more cost effective packaging than other films which require more than one web. A mono web is a term adapted by plastic resin processors to denote a single plastic film, not as a final discrete article but as a long film somewhere in the processing stage, frequently being drawn off a large roll of printed film. When used as a mono web where PVdC is the sealant layer coming in contact with the food product, the cross-linked PVOH layer can also be printed.

In applications where the food being packaged requires a light barrier, a white film may be applied to the cross-linked PVOH or the PVdC layer. Commercially available opaque polypropylene from Mobil Chemical, Films Division, is a preferred white film.

When higher barrier or a stronger packaging film is required, the cross-linked PVOH layer may be laminated to another film that provides improved strength and barrier. Such films include, PET, nylon and polyolefins. For improved sealability either surface may be further laminated with a layer of polyethylene.

The PVOH/PVdC film structures of the present invention are transparent so that packaged condiments and sauces can be freely inspected and scanned for contaminants.

The cross-linked PVOH coated films described above are intended, in a third embodiment, to be adhesively laminated to either oriented or unoriented commercially available thermoplastic films such as homopolymer polypropylene film, polypropylene with coated layers, polypropylene with slip additives, polypropylene with coextruded layers, opaque polypropylene, polyethylene, nylon, polyethylene terephthalate, polycarbonate, polystyrene, etc. A preferred class of films are the polyolefins. Most preferred is a polymeric substrate of OPP having a thickness of 0.025 mm (1.00 mil).

Other particularly preferred substrates to which the above cross-linked PVOH film combination is adhesively laminated are moisture barrier materials such as metallized films, preferably metallized OPP.

The metallized films useful in the present invention provide excellent moisture barrier, but inherently permit the transmission of oxygen. By laminating a cross-linked PVOH film combination to metallized film, a multi-layer film structure is obtained which has significantly enhanced oxygen and moisture barrier.

Within the metallized films class, metallized oriented polypropylene is most preferred. Commercially available metallized OPP is available from Mobil. Chemical, Films Division (Bicor 70MB-HB). Many commercially available metallized OPP films are composites consisting of a polypropylene core having, on at least one of its surfaces, a relatively thin layer of a propylene-ethylene copolymer. The copolymer layer is subjected to a corona discharge treatment and the coating metal is then deposited by such methods as electroplating, sputtering, or vacuum metallizing. The metal may be aluminum, copper, silver, or chromium.

A preferred metallized OPP and method of manufacture is disclosed in U.S. Patent No. 4,345,005.

Commercially available metallized OPP has excellent moisture barrier properties as shown by a very low water vapor transmission rate ("WVTR"), typically 0.775 g/m²/24 hr at 37.8°C, 90% relative humidity ("RH"). However, with an average oxygen transmission rate ("TO₂") of 31 to 77.5 cc/m²/24 hr, metallized OPP does not provide adequate oxygen barrier for many applications. Thus, the combination of metallized OPP with cross-linked PVOH coated film creates a structure that provides both, excellent moisture and oxygen barrier.

Metallized films known in the art can be laminated to the cross-linked PVOH film combinations by applying an adhesive coating onto the cross-linked PVOH layer. In the present invention the adhesive bonds the metallized film onto the PVOH bearing surface of the polymeric substrate. Prior to applying the adhesive, the cross-linked PVOH layer can be ink printed. The adhesive can be any adhesive used with metallized films, polyurethane being preferred. The metallized film can also be attached to the cross-linked PVOH film combination by polymounting, i.e., extrusion lamination. Extrusion lamination is a known process for joining two webs by feeding them through a machine that extrudes a thin layer of plastic between them to act as an adhesive.

Figure 4 illustrates this latter embodiment of the present invention. Layer 40 represents a surface treated polymeric substrate which is coated with a primer layer 41 on at least one surface thereof. A cross-linked PVOH layer 42 is adhered to the surface treated substrate. The cross-linked PVOH film combination is adhesively laminated to a metallized film layer 44 by applying an adhesive coating 43 onto the cross-linked PVOH bearing surface.

### EXAMPLE 1

A homopolymer polypropylene core layer was coextruded with skin layers of an ethylene-propylene random copolymer. The random copolymer contained 3 to 5% by weight of ethylene. The extruded film was biaxially oriented to 4 to 5 times machine direction and 7 to 10 times transverse direction to yield a film having a thickness of 2.5·10⁻⁵ m (1 mil). The thickness of the skin layers was 8% of the film and they were of equal thickness. This film combination was corona discharge treated in accordance with commonly employed prior art techniques to produce a surface with a wetting tension of 42.10⁻³ N/m (42 dynes/cm). The treated film was precoated on both sides with 0.1 wt.% poly(ethyleneimine), as manufactured by BASF-Wyandotte Corporation Polyamin P product. The film was air-dried at 100°C. This coating weight was too low to be measured, but was calculated to be in the range of 0.002g/m² by means of optical density. One treated and primed surface of this film structure was then coated with the appropriate solution of PVOH, cross-linking agent and catalyst. The solutions were applied utilizing a reverse direct gravure coater and the coated film was passed through a dry-air oven at from 100 to 125°C. This produced a coating weight of 0.5 g/m².

The dried film was then tested in an oxygen-permeability device in which a stream of dry oxygen was passed through an aqueous salt solution-permeated pad to control the gas moisture content and then through the film, disposed at right angles to the stream with the cross-linked PVOH coating upstream. The oxygen transmitted was determined and the amount of oxygen passed per unit area of film per time period was calculated.

Samples bearing cross-linked PVOH layer obtained by using sulfuric acid catalyzed systems were superior to any other catalyzed system for inhibiting the transmission of oxygen through a packaging film. The rubbing resistance of the sulfuric acid catalyzed film combinations was also outstanding. Oxygen transmission and rubbing resistance rates for several samples bearing PVOH cross-linked in the presence of methylated melamine formaldehyde, ammonium chloride and sulfuric acid are set forth in Table 1 below.

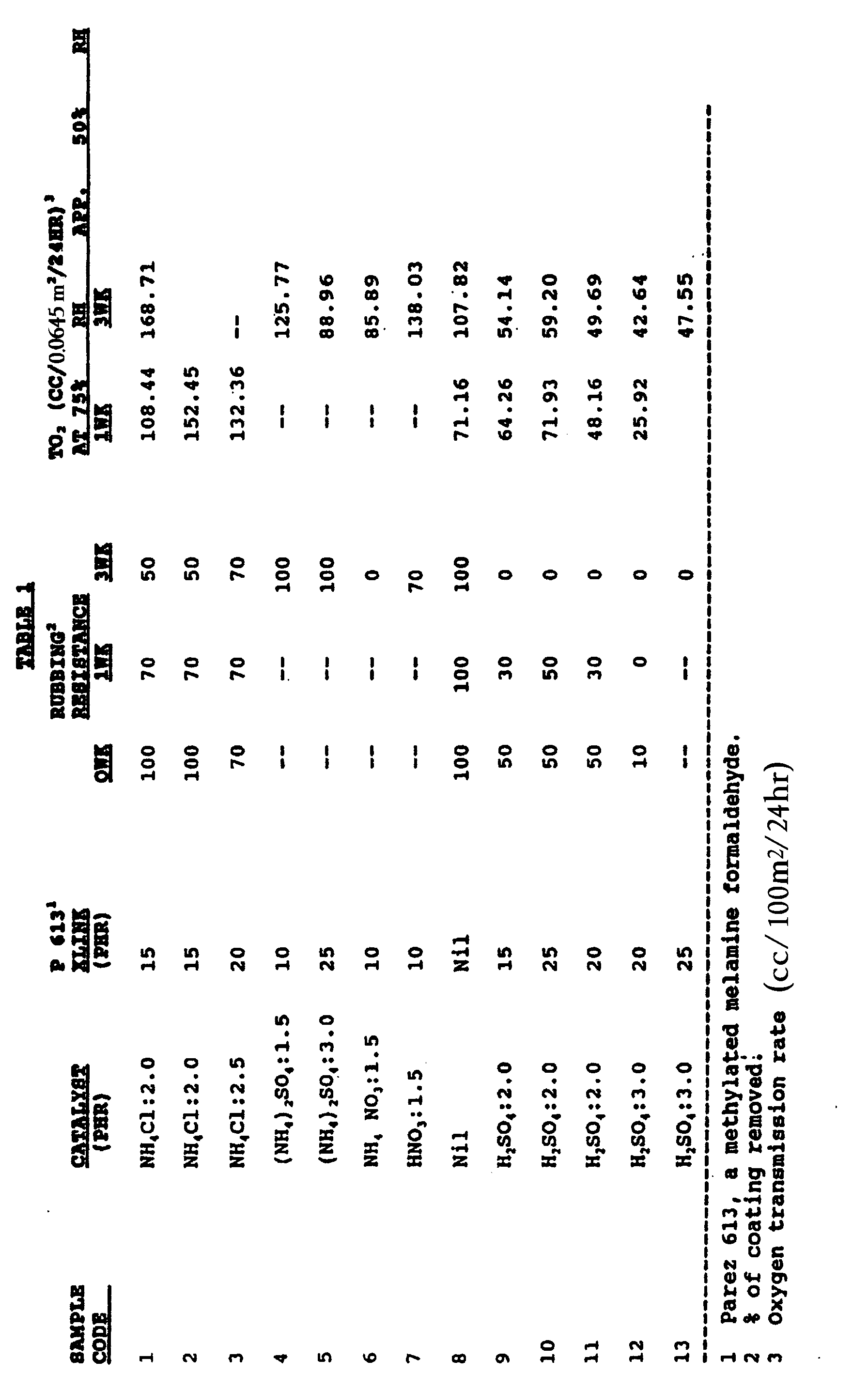

Table 1 illustrates that samples bearing PVOH cross-linked with sulfuric acid have oxygen transmission rate and rubbing resistance values far superior to those cross-linked with ammonium chloride.

### EXAMPLE 2

A cross-linked PVOH coating was applied to a 2.5·10⁻⁵ m (1.00 mil) OPP film, surface treated and primed as in Example 1 above. The resulting film combination was laminated on the cross-linked PVOH bearing surface with a box board by using a polyurethane adhesive coated onto the box board.

The above procedure protects the cross-linked PVOH coating and prevents liquids such as tomato sauce, milk, wines, juices and the like from leaching any components from the coating. The resulting film was then extrusion coated with a sealant layer of SURLYN® or polyethylene. Table 2 below summarizes the oxygen and moisture barrier properties of the film structure obtained in this example. The WVTR values obtained for the films set forth in Table 2 have been measured as described in ASTM F-372. Comparative TO₂ and WVTR results to EVOH are also included.

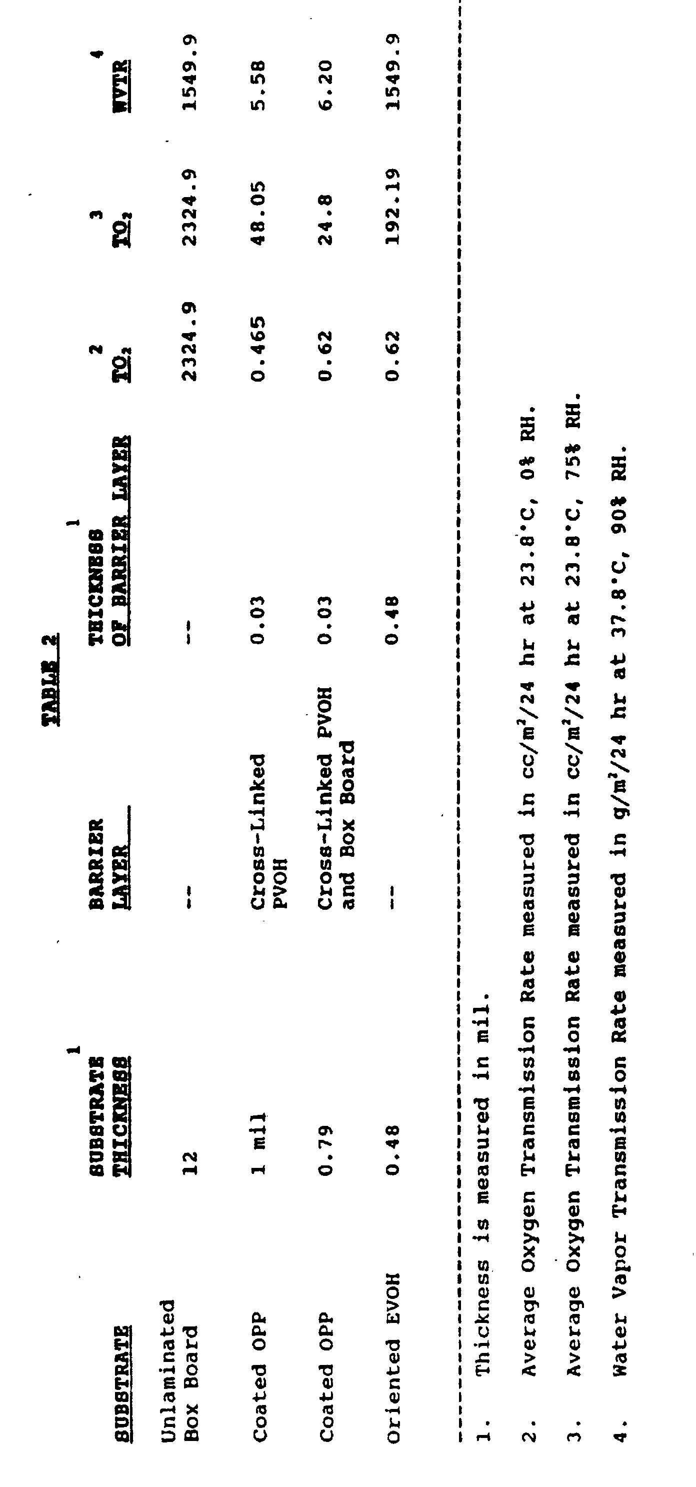

In Table 2, plain box board material shows poor oxygen barrier characteristics. After the box board material is laminated onto the outer face of a cross-linked PVOH bearing OPP substrate the oxygen transmission rate decreases substantially. In addition, Table 2 also indicates that in the film structure of the present invention, a much thinner coating of cross-linked PVOH film combination is required than EVOH to provide a structure with comparable oxygen and moisture barrier properties. As a result, by using the box board film structure of the present invention significant cost reductions are obtained.

### EXAMPLE 3

A homopolymer polypropylene core layer was coextruded with skin layers of an ethylene-propylene random copolymer. The random copolymer contained 3 to 5% by weight of ethylene. The extruded film was biaxially oriented to 4 to 5 times machine direction and 7 to 10 times transverse direction to yield a film having a thickness of 0.025 mm (1 mil). The thickness of the skin layers was 8% of the film and they were of equal thickness. This film combination was corona discharge treated in accordance with commonly employed prior art techniques to produce a surface with a wetting tension of 42 dynes/cm. The treated film was precoated on one side with 0.1 wt% poly(ethyleneimine), as manufactured by BASF-Wyandotte Corporation Polyamin P product and on the other with epoxy of 0.075g/m². The film was air-dried at 100°C. This coating weight was too low to be measured, but was calculated to be in the range of 0.002g/m² by optical density. The primer coated treated substrate was then coated on one surface with a PVdC coating weight of 4.5 g/m². The PVdC coating was a 50 wt % aqueous latex solution resulting from the polymerization of VdC with methyl acrylic acid. The opposite surface of this film structure was then coated with the appropriate solution of PVOH, cross-linking agent and catalyst. The solutions were applied utilizing a reverse direct gravure coater and the coated film was passed through a dry-air oven at from 100 to 125°C. This produced a coating weight of 0.5 g/m². The thickness of the polymeric film structure of the present example including both PVOH and PVdC was 4.32·10⁻⁵ m (1.7 mil).

The dried films were then tested in an oxygen-permeability device in which a stream of dry oxygen was passed through an aqueous salt solution-permeated pad to control the gas moisture content and then through the film, disposed at right angles to the stream with the cross-linked PVOH coating upstream. The oxygen transmitted was determined and the amount of oxygen passed per unit area of film per time period was calculated.

Samples bearing cross-linked PVOH layer obtained by using sulfuric acid catalyzed systems were superior to any other catalyzed system for inhibiting the transmission of oxygen through packaging films. The rubbing resistance of the sulfuric acid catalyzed film combinations was also outstanding. Oxygen transmission and rubbing resistance rates for several samples bearing PVOH cross-linked in the presence of methylated melamine formaldehyde, ammonium chloride and sulfuric acid are set forth in Table 3 below.

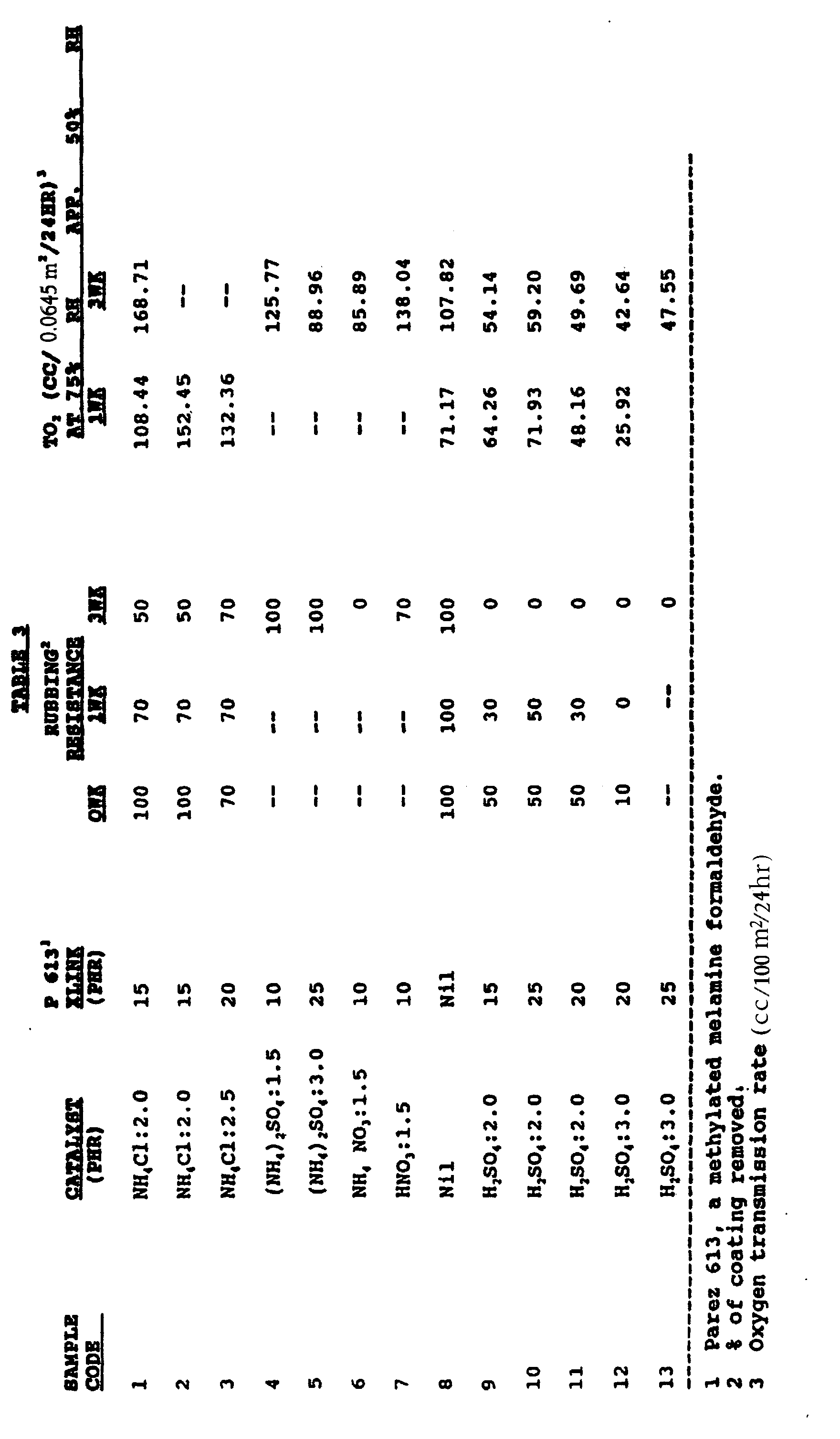

Table 3 illustrates that samples bearing PVOH cross-linked with sulfuric acid have oxygen transmission rate and rubbing resistance values far superior to those cross-linked with ammonium chloride.

After testing for oxygen permeability was completed, the films were tested for moisture barrier by measuring the water vapor transmission rate ("WVTR").

TO₂ and WVTR values for an uncoated OPP film, an OPP film coated only with cross-linked PVOH and an OPP film coated with both cross-linked PVOH and PVdC are set forth in Table 4 below. The WVTR was measured as described in ASTM F372.

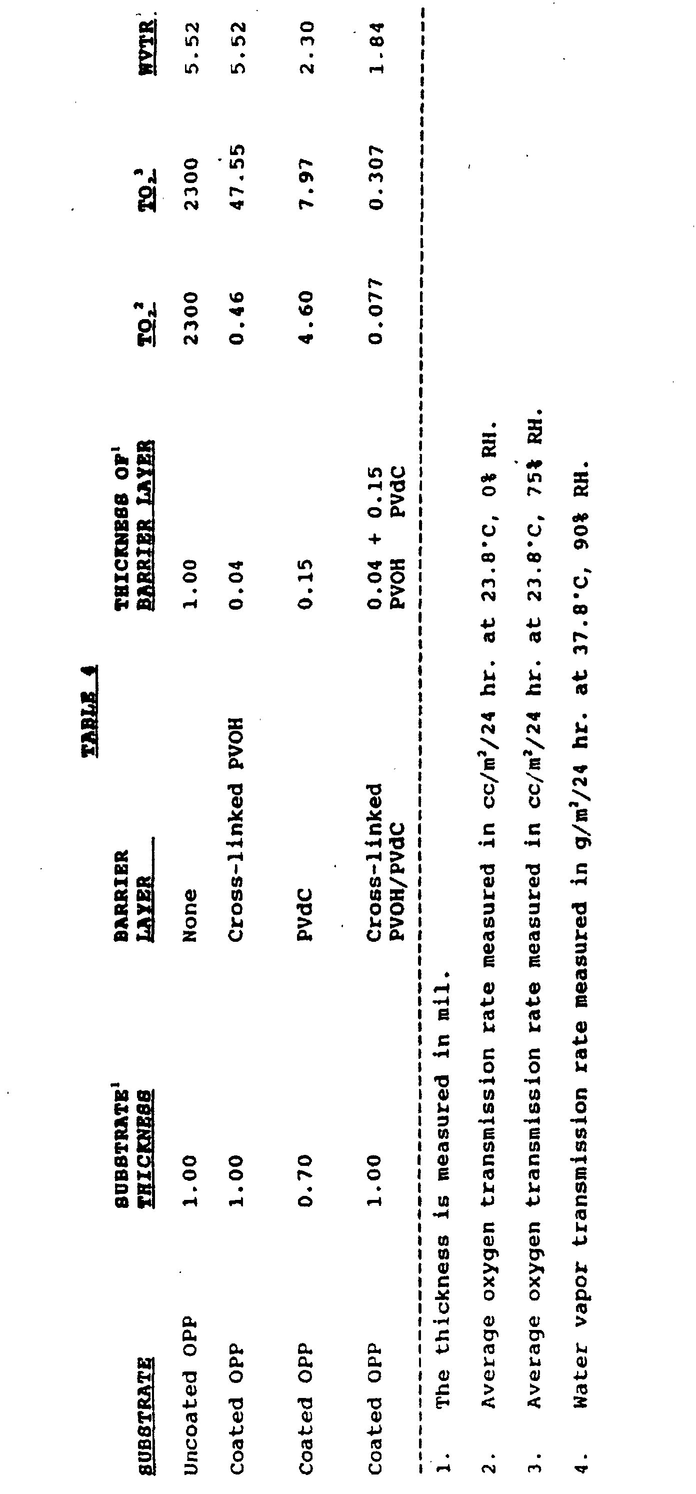

As illustrated in Table 4, an uncoated OPP film shows a high oxygen transmission rate as a result of poor oxygen barrier properties. The oxygen transmission rate is significantly decreased by the addition of a layer of cross-linked PVOH. In addition, when a core layer of OPP is sandwiched between a layer of cross-linked PVOH and a layer of PVdC, in accordance with the method provided by the present invention, both the oxygen barrier and the moisture barrier properties of the resulting film structure are considerably enhanced. Also, the oxygen barrier properties of the PVdC are largely insensitive to moisture, i.e., relative humidity independent. Therefore, even under very extreme conditions, where the barrier properties of the PVOH have been degraded, the PVdC maintains the oxygen transmission rate at less than 15.34 cc/m²/24 hr.

Moreover, the use of two oxygen barrier layers minimizes the chances of two pin holes from occurring in the lining up of the coating. This reduces the oxygen transmission rate by an amount greater than ordinarily expected.

### EXAMPLE 4

A homopolymer polypropylene core layer was coextruded with skin layers of an ethylene-propylene random copolymer. The random copolymer contained 3 to 5% by weight of ethylene. The extruded film was biaxially oriented to 4 to 5 times machine direction and 7 to 10 times transverse direction to yield a film having a thickness of 2.5·10⁻⁵m (1 mil). The thickness of the skin layers was 12% of the film and they were of equal thickness. This film combination was corona discharge treated in accordance with commonly employed prior art techniques to produce a surface with a wetting tension of 42·10⁻³ N/cm (42 dynes/cm). The treated film was precoated on both sides with 0.1 wt% poly(ethyleheimine), as manufactured by BASF-Wyandotte Corporation Polyamine P product. The film was air-dried at 100°C. This coating weight was too low to be measured, but was calculated to be in the range of 0.002 g/m². One treated and primed surface of this film structure was then coated with the appropriate solution of PVOH, cross-linking agent and catalyst. The solutions were applied utilizing a reverse direct gravure coater and the coated film was passed through a dry-air oven at from 100 to 125°C. This produced a coating weight of 0.5 g/m².

The dried films were then tested in an oxygen-permeability device in which a stream of dry oxygen is passed through an aqueous salt solution-permeated pad to control the gas moisture content and then through the films, disposed at right angles to the stream with the cross-linked PVOH coating upstream. The oxygen transmitted was determined and the amount of oxygen passed per unit area of film per time period was calculated.

Samples bearing cross-linked PVOH layer obtained by using sulfuric acid catalyzed systems were superior to any other catalyzed system for inhibiting the transmission of oxygen through the packaging films. The rubbing resistance of the sulfuric acid catalyzed film combinations was also outstanding. Oxygen transmission and rubbing resistance rates for several samples bearing PVOH cross-linked in the presence of methylated melamine formaldehyde, ammonium chloride and sulfuric acid are set forth in Table 5 below.

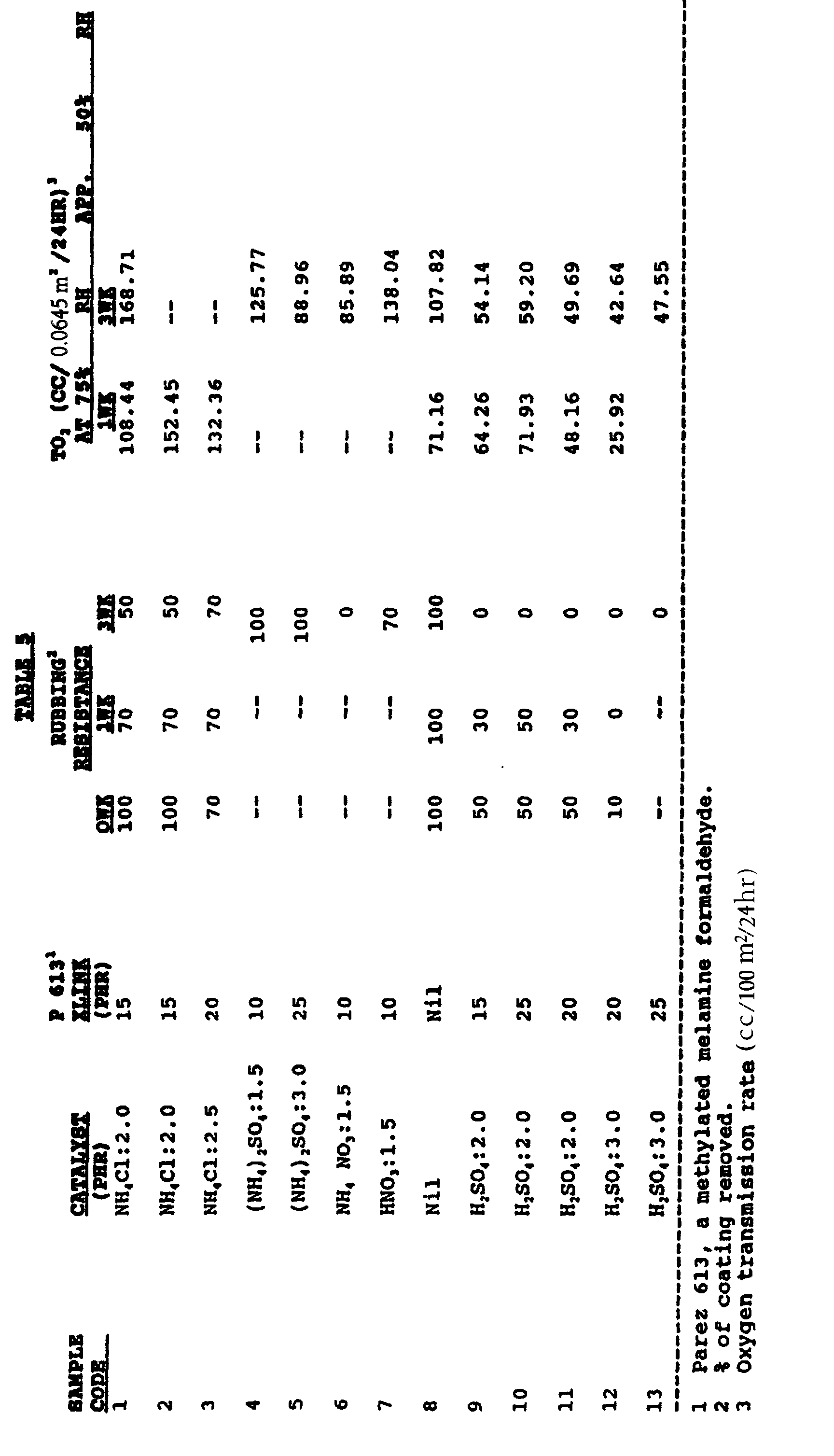

Table 5 illustrates that samples bearing PVOH cross-linked with sulfuric acid have oxygen transmission rate and rubbing resistance values far superior to those cross-linked with ammonium chloride.

### EXAMPLE 5

A cross-linked PVOH coating was applied to a 2.5·10⁻⁵ m (1.00 mil) OPP film, surface treated and primed as in Example 4 above. The resulting film combination was laminated onto the cross-linked PVOH bearing surface with a layer of metallized OPP. The lamination was carried out by using a coating of polyurethane adhesive over the vacuum deposited aluminum surface of the metallized OPP. The resulting structure had excellent oxygen and moisture barrier properties as illustrated in Table 6 below.

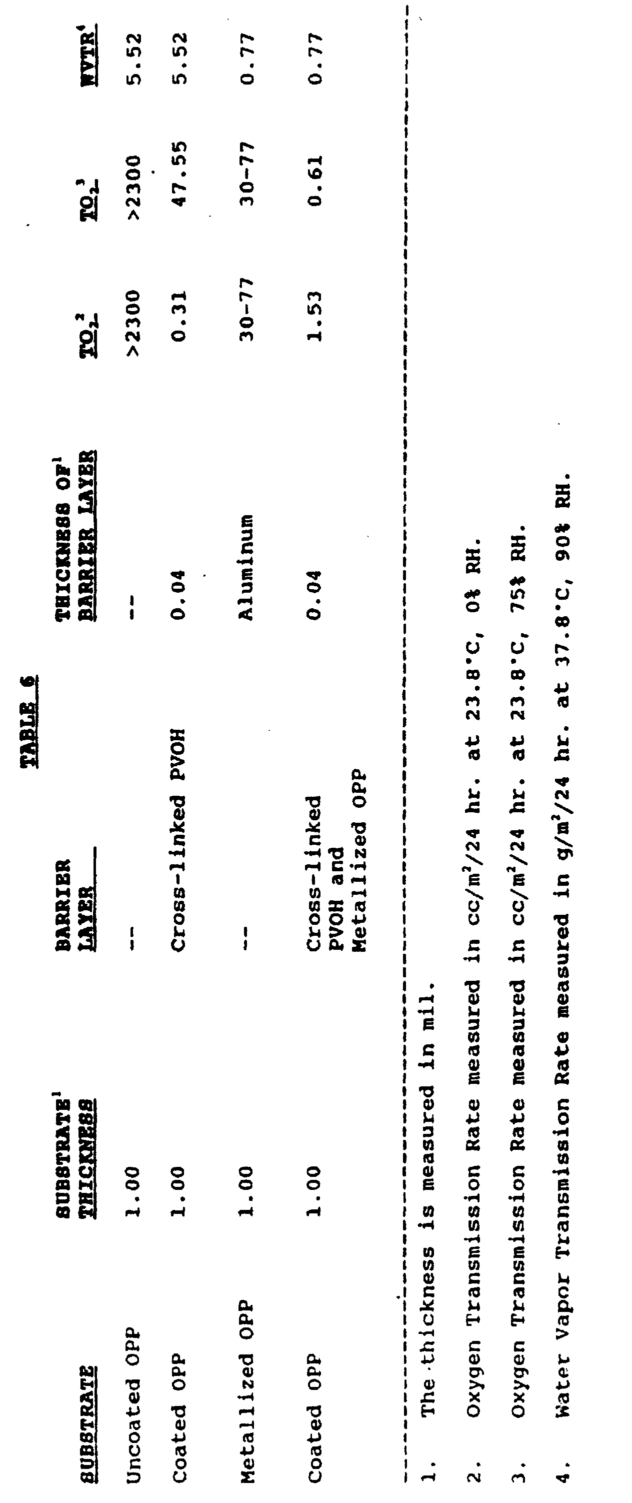

In Table 6, uncoated OPP shows poor oxygen barrier and moisture properties. By coating OPP with cross-linked PVOH the oxygen barrier properties of the resulting film structure increase dramatically. However, the moisture barrier properties are not enhanced. Table 6 further illustrates that a typical metallized OPP provides an excellent moisture barrier; however, with TO₂ values from 30 to 77 cc/m²/24 hr the oxygen barrier properties of metallized OPP are inadequate for many applications. Consequently, when a metallized OPP layer is laminated or polymounted onto a film combination including cross-linked PVOH, the resulting structure has both excellent oxygen and moisture barrier properties.

## Claims

1. A polymeric film structure which comprises:
(I) a polymeric substrate having a first and second surface, at least the first surface having been treated; and
(II) an oxygen barrier comprising polyvinyl alcohol cross-linked with an aldehyde containing cross-linking agent in the presence of a catalytic amount of an inorganic acid on said treated surface of said polymeric substrate; **characterised in that** the structure also comprises
(III) a moisture barrier comprising (1) a cellulose material laminated to an outer surface of said oxygen barrier, (2) a metallized polymeric composite comprising an oriented polyolefin layer having at least one treated surface and a metal coating thereon, or (3) a layer of polyvinylidene chloride adhered to said second surface.

2. The film structure of Claim 1, wherein said cellulose material is paper, paperboard or fiberboard, said oriented polyolefin layer is oriented polypropylene, or polypropylene and polyethylene, and said metal coating is aluminum, copper, silver, or chromium.

3. The film structure of Claim 1, further comprising an adhesive between said oxygen barrier and said cellulose material or said metallized polymeric composite.

4. The film structure of Claim 3, wherein said adhesive is polyurethane or polyethylene.

5. The film structure of any one of Claims 1 to 4, wherein said polymeric substrate is selected from the group consisting of oriented polypropylene, polyethylene, polyethylene terephthalate, nylon, cast polyolefins, and mixtures thereof.

6. The film structure of any one of Claims 1 to 5, wherein said aldehyde containing cross-linking agent is selected from the group consisting of urea formaldehyde, melamine formaldehyde, methylated melamine formaldehyde, trimethylol melamine urea formaldehyde, and mixtures thereof.

7. The film structure of any one of Claims 1 to 6, wherein said oxygen barrier includes from 62.5% to 95% by weight of said polyvinyl alcohol and from 5% to 30% by weight of said cross-linking agent.

8. The film structure of any one of Claims 1 to 7, wherein said oxygen barrier includes from 0.1% to 7.5% by weight of said inorganic acid.

9. The film structure of any one of Claims 1 to 8, wherein said polymeric substrate further comprises a coextruded propylene-ethylene copolymer skin on at least one surface thereof.

10. The film structure of any one of claims 1 to 9, wherein said polymeric substrate further comprises a primer on at least one surface thereof, said primer selected from the group consisting of a primer produced by condensing a monoaldehyde with an interpolymer of acrylamide or methacrylamide and at least one other unsaturated monomer; a primer produced by condensing aminoaldehyde with acrylamide or methacrylamide and interpolymerizing the condensation product with another unsaturated monomer in the presence of a C₁-C₆ alkanol; poly(ethyleneimine); and the reaction product of an epoxy resin and an acidified aminoethylated vinyl polymer.

11. The film structure of any one of claims 1 to 10, wherein said polymeric substrate further comprises a heat seal layer on a surface of said polymeric substrate.

12. The film structure of any one of Claims 1 to 10, wherein said cellulose material further comprises a heat seal layer on an outer surface of said cellulose material.

13. A process for making a polymeric film structure having improved oxygen and moisture barrier characteristics, in which the process comprises the following steps:
(i) coating one surface of a polymeric substrate adapted to receive an oxygen barrier with an aqueous solution of polyvinyl alcohol, an aldehyde-containing cross-linking agent and a catalytic amount of sulfuric acid and allowing said polyvinyl alcohol to cross-link thereby forming said oxygen barrier; and
(ii) providing a moisture barrier to an outer surface of said oxygen barrier by (1) adhesion laminating box board material onto said outer surface of said oxygen barrier layer, or by (2) adhesion or extrusion laminating of metallized oriented polypropylene onto said outer surface of said oxygen barrier layer.

14. The process of Claim 13, wherein said aqueous solution includes a solid content comprising from 62.5% to 95% by weight of said polyvinyl alcohol, from 5% to 30% by weight of said cross-linking agent and up to 7.5% by weight of said sulfuric acid.

15. The process of Claim 13, wherein said polymeric substrate has been treated to a surface free energy of at least 35 x 10⁻³ N/m (35 dynes/cm).

16. The film structure of Claim 1, further comprising an opaque layer on said oxygen barrier or on said moisture barrier layer, said opaque layer being a cavitated polyolefin or a mixture of cavitated polyolefins.

17. The film structure of claim 1 wherein the moisture barrier comprises a layer of polyvinylidene chloride adhered to the second surface, and which further comprises an outer layer laminated onto said oxygen barrier.

18. The film structure of claim 17, wherein said outer layer is polyethylene terephthalate, oriented polyvinylidene, nylon, low density polyethylene, linear low density polyethylene, or high density polyethylene.

19. The film structure of claim 17, wherein said outer polymeric layer is paper, paperboard, or fiberboard.

20. The film structure of any preceding claim wherein the acid is sulphuric acid and the said moisture barrier is the cellulose material laminated to an outer surface of the oxygen barrier.

## Patentansprüche

1. Polymerfilmstruktur, welche umfaßt:
(I) ein polymeres Substrat mit einer ersten und einer zweiten Oberfläche, wobei zumindest die erste Oberfläche behandelt worden ist; und
(II) eine Sauerstoffsperre, die Polyvinylalkohol umfaßt, der in Gegenwart einer katalytischen Menge einer anorganischen Säure auf der behandelten Oberfläche des polymeren Substrats mit einem Aldehyd enthaltenden Vernetzungsmittel vernetzt worden ist;
**dadurch gekennzeichnet, daß** die Struktur auch folgendes umfaßt:
(III) eine Feuchtigkeitssperre, die umfaßt: (1) ein Cellulosematerial, das auf die Außenseite der Sauerstoffsperre laminiert ist, (2) einen metallisierten, polymeren Verbundstoff, der eine Schicht aus einem orientierten Polyolefin umfaßt, die mindestens eine behandelte Oberfläche und darauf eine Metallschicht aufweist, oder (3) eine Schicht aus Polyvinylidenchlorid, die an der zweiten Oberfläche haftet.

2. Filmstruktur nach Anspruch 1, wobei das Cellulosematerial Papier, Pappe oder Faserplatte ist, wobei die Schicht aus orientiertem Polyolefin orientiertes Polypropylen oder Polypropylen und Polyethylen ist und die Metallschicht Aluminium, Kupfer, Silber oder Chrom ist.

3. Filmstruktur nach Anspruch 1, die außerdem zwischen der Sauerstoffsperre und dem Cellulosematerial oder dem metallisierten polymeren Verbundstoff ein Klebemittel umfaßt.

4. Filmstruktur nach Anspruch 3, wobei das Klebemittel Polyurethan oder Polyethylen ist.

5. Filmstruktur nach einem der Ansprüche 1 bis 4, wobei das polymere Substrat aus der Gruppe ausgewählt ist, die aus orientiertem Polypropylen, Polyethylen, Polyethylenterephthalat, Nylon, gegossenen Polyolefinen und Gemischen davon besteht.

6. Filmstruktur nach einem der Ansprüche 1 bis 5, wobei das Aldehyd enthaltende Vernetzungsmittel aus der Gruppe ausgewählt ist, die aus Harnstofformaldehyd, Melaminformaldehyd, methyliertem Melaminformaldehyd, Trimethylolmelaminharnstoffformaldehyd und Gemischen davon besteht.

7. Filmstruktur nach einem der Ansprüche 1 bis 6, wobei die Sauerstoffsperre 62,5 bis 95 Gew.-% des Polyvinylalkohols und 5 bis 30 Gew.-% des Vernetzungsmittels enthält.

8. Filmstruktur nach einem der Ansprüche 1 bis 7, wobei die Sauerstoffsperre 0,1 bis 7,5 Gew.-% der anorganischen Säure enthält.

9. Filmstruktur nach einem der Ansprüche 1 bis 8, wobei das polymere Substrat außerdem auf mindestens einer Oberfläche eine coextrudierte Haut aus einem Propylen-Ethylen-Copolymer umfaßt.

10. Filmstruktur nach einem der Ansprüche 1 bis 9, wobei das polymere Substrat außerdem auf mindestens einer Oberfläche eine Grundierung aufweist, wobei die Grundierung aus der Gruppe ausgewählt ist, die aus einer Grundierung, die durch Kondensieren eines Monoaldehyds mit einem Mischpolymerisat von Acrylamid oder Methacrylamid und mindestens einem anderen ungesättigten Monomer hergestellt worden ist; einer Grundierung, die durch Kondensieren von Aminoaldehyd mit Acrylamid oder Methacrylamid und Copolymerisieren des Kondensationsproduktes mit einem weiteren ungesättigten Monomer in Gegenwart eines C₁-C₆-Alkanols hergestellt worden ist; Poly(ethylenimin); und dem Reaktionsprodukt eines Epoxidharzes und eines angesäuerten, aminoethylierten Vinylpolymer besteht.

11. Filmstruktur nach einem der Ansprüche 1 bis 10, wobei das polymere Substrat außerdem eine Heißsiegelschicht auf einer Oberfläche des polymeren Substrats umfaßt.

12. Filmstruktur nach einem der Ansprüche 1 bis 10, wobei das Cellulosematerial außerdem eine Heißsiegelschicht auf einer Außenseite des Cellulosematerials umfaßt.

13. Verfahren zur Herstellung einer Polymerfilmstruktur mit besseren Sauerstoff- und Feuchtigkeitssperreigenschaften, wobei das Verfahren folgende Schritte umfaßt:
(i) Beschichten einer Oberfläche eines polymeren Substrats, das für die Aufnahme einer Sauerstoffsperre gedacht ist, mit einer wäßrigen Polyvinylalkohollösung, einem Aldehyd enthaltenden Vernetzungsmittel und einer katalytischen Menge Schwefelsäure und Vernetzenlassen des Polyvinylalkohols, wodurch die Sauerstoffsperre erzeugt wird; und
(ii) Bereitstellen einer Feuchtigkeitssperre auf einer Außenseite der Sauerstoffsperre durch (1) Klebbondieren eines Kartonmaterials auf die Außenseite der Sauerstoffsperrschicht oder durch (2) Klebbondieren oder Extrusionslaminieren von metallisiertem orientiertem Polypropylen auf die Außenseite der Sauerstoffsperrschicht.

14. Verfahren nach Anspruch 13, wobei die wäßrige Lösung einen Feststoffgehalt aufweist, der 62,5 bis 95 Gew.-% des Polyvinylalkohols, 5 bis 30 Gew.-% des Vernetzungsmittels und bis zu 7,5 Gew.-% Schwefelsäure umfaßt.

15. Verfahren nach Anspruch 13, wobei das polymere Substrat bis zu einer freien Oberflächenenergie von mindestens 35 x 10⁻³ N/m (35 dyne/cm) behandelt worden ist.

16. Filmstruktur nach Anspruch 1, die außerdem eine undurchsichtige Schicht auf der Sauerstoffsperre oder auf der Feuchtigkeitssperrschicht umfaßt, wobei die undurchsichtige Schicht ein mit Hohlräumen versehenes Polyolefin oder ein Gemisch von mit Hohlräumen versehenen Polyolefinen ist.

17. Filmstruktur nach Anspruch 1, wobei die Feuchtigkeitssperre eine Schicht aus Polyvinylidenchlorid umfaßt, die an der zweiten Oberfläche haftet, und die außerdem eine Außenschicht aufweist, die auf die Sauerstoffsperre laminiert ist.

18. Filmstruktur nach Anspruch 17, wobei die Außenschicht Polyethylenterephthalat, orientiertes Polyvinyliden, Nylon, Polyethylen niedriger Dichte, lineares Polyethylen niedriger Dichte oder Polyethylen hoher Dichte ist.

19. Filmstruktur nach Anspruch 17, wobei die äußere polymere Schicht Papier, Pappe oder einer Faserplatte ist.

20. Filmstruktur nach einem der vorstehenden Ansprüche, wobei die Säure Schwefelsäure ist und die Feuchtigkeitssperre auf die Außenseite der Sauerstoffsperre laminiertes Cellulosematerial ist.

## Revendications

1. Structure de film polymère qui comprend :
(I) un substrat polymère ayant une première et une deuxième surface, au moins la première surface ayant été traitée ; et
(II) une barrière contre l'oxygène comprenant un alcool polyvinylique réticulé avec un aldéhyde contenant un agent de réticulation en présence d'une quantité catalytique d'un acide inorganique sur ladite surface traitée dudit substrat polymère ; **caractérisé en ce que** la structure comprend aussi
(III) une barrière contre l'humidité comprenant (1) un matériau de cellulose laminé sur une surface extérieure de ladite barrière contre l'oxygène, (2) un composite polymère métallisé comprenant une couche de polyoléfine orientée ayant au moins une surface traitée et un revêtement de métal sur celle-ci, ou (3) une couche de chlorure de polyvinylidène adhérant à ladite deuxième surface.

2. Structure de film selon la revendication 1, dans laquelle ledit matériau de cellulose est le papier, le carton ou le carton-fibre, ladite couche de polyoléfine orientée est le polypropylène, ou le polypropylène et le polyéthylène orienté, et ledit revêtement de métal est l'aluminium, le cuivre, l'argent, ou le chrome.

3. Structure de film selon la revendication 1, comprenant de plus un adhésif entre ladite barrière contre l'oxygène et ledit matériau de cellulose ou ledit composite polymère métallisé.

4. Structure de film selon la revendication 3, dans laquelle ledit adhésif est le polyuréthane ou le polyéthylène.

5. Structure de film selon l'une quelconque des revendications 1 à 4, dans laquelle ledit substrat polymère est choisi dans le groupe constitué par le polypropylène, le polyéthylène, le téréphtalate de polyéthylène, le nylon, les polyoléfines coulés, et des mélanges de ceux-ci.

6. Structure de film selon l'une quelconque des revendications 1 à 5, dans laquelle ledit aldéhyde contenant un agent de réticulation est choisi dans le groupe constitué par l'urée formaldéhyde, la mélamine formaldéhyde, la mélamine méthylée formaldéhyde , la triméthylolmélamine urée formaldéhyde , et des mélanges de celles-ci.

7. Structure de film selon l'une quelconque des revendications 1 à 6, dans laquelle ladite barrière contre l'oxygène comprend de 62,5 % à 95 % en poids dudit alcool polyvinylique et de 5 % à 30 % en poids dudit agent de réticulation.

8. Structure de film selon l'une quelconque des revendications 1 à 7, dans laquelle ladite barrière contre l'oxygène comprend de 0,1 % à 7,5 % en poids dudit acide inorganique.

9. Structure de film selon l'une quelconque des revendications 1 à 8, dans laquelle ledit substrat polymère comprend de plus une pellicule de copolymère propylène-éthylène sur au moins une surface de celui-ci.

10. Structure de film selon l'une quelconque des revendications 1 à 9, dans laquelle ledit substrat polymère comprend de plus une amorce sur au moins une surface de celui-ci, ladite amorce étant choisie dans te groupe consistant en une amorce produite en condensant un monoaldéhyde avec un interpolymère d'acrylamide ou de méthacrylamide et au moins un autre monomère insaturé; une amorce produite en condensant un aminoaldéhyde avec l'acrylamide ou le méthacrylamide et en interpolymérisant le produit de condensation avec un autre monomère insaturé en présence d'un alcanol en C₁-C₆ ; la poly(éthylèneimine) ; et le produit de réaction d'une résine époxy et un polymère vinylique aminoéthylé acidifié.

11. Structure de film selon l'une quelconque des revendications 1 à 10, dans laquelle ledit substrat polymère comprend de plus une couche thermosoudée sur une surface dudit matériau de cellulose.

12. Structure de film selon l'une quelconque des revendications 1 à 10, dans laquelle ledit matériau de cellulose comprend de plus une couche thermosoudée sur une surface extérieure dudit matériau de cellulose.

13. Un procédé pour fabriquer une structure de film polymère ayant des caractéristiques de barrière contre l'oxygène et l'humidité améliorées, dans lequel le procédé comprend les étapes suivantes consistant à :
(i) enduire une surface d'un substrat polymère adapté pour recevoir une barrière contre l'oxygène avec une solution aqueuse d'alcool polyvinylique, un agent de réticulation contenant un aldéhyde et une quantité catalytique d'acide sulfurique et en laissant l'alcool polyvinylique réticuler de manière à former ladite barrière contre l'oxygène ; et
(ii) former une barrière contre l'humidité sur une surface externe de ladite barrière contre l'oxygène par (1) laminage par adhérence de matériau de carton d'emballage sur ladite surface extérieure de ladite couche de barrière contre l'oxygène, ou par (2) laminage par adhérence ou extrusion de polypropylène orienté métallisé sur ladite surface externe de ladite couche de barrière contre l'oxygène.

14. Le procédé selon la revendication 13, dans lequel ladite solution aqueuse comprend une teneur en matières solides comprenant de 62,5 % à 95 % en poids dudit alcool polyvinylique, de 5 % à 30 % en poids dudit agent de réticulation et jusqu'à 7.5% en poids dudit acide sulfurique.

15. Le procédé selon la revendication 13, dans lequel ledit substrat polymère a été traité à une énergie libre superficielle d'au moins 35 x 10⁻³ N/m (35 dynes/cm).

16. Structure de film selon la revendication 1, comprenant de plus une couche opaque sur ladite barrière contre l'oxygène ou sur ladite couche de barrière contre l'humidité, ladite couche opaque étant une polyoléfine à cavitation ou un mélange de polyoléfine à cavitation.

17. Structure de film selon la revendication 1, dans laquelle la barrière contre l'humidité comprend une couche de chlorure de polyvinylidène adhérant à la deuxième surface, et qui comprend de plus une couche externe laminée sur ladite barrière contre l'oxygène.

18. Structure de film selon la revendication 17, dans laquelle ladite couche externe est le téréphtalate de polyéthylène, le polyvinylidène orienté, le nylon, le polyéthylène basse densité, le polyéthylène basse densité linéaire, ou le polyéthylène haute densité.

19. Structure de film selon la revendication 17, dans laquelle ladite couche polymère externe est le papier, le carton ou le carton-fibre.

20. Structure de film selon l'une quelconque des revendications précédentes dans laquelle l'acide est l'acide sulfurique et ladite barrière contre l'humidité est le matériau de cellulose laminé sur une surface extérieure de la barrière contre l'oxygène.
